# EUROPEAN PATENT APPLICATION

(11) **EP 1 367 751 A1**
(43) Date of publication of application: **03.12.2003**
(21) Application number: 02360155.2
(22) Date of filing: 28.05.2002
(51) Int. Cl.: H04J 3/16

(54) **Fallback in transmission of data signals through a synchronous digital network using virtual concatenated containers**

(71) Applicant: ALCATEL, 75008 Paris (FR)
(72) Inventor: Grammel Gert, 75446 Uhingen (DE)
(74) Representative: Urlichs, Stefan, Dipl.-Phys.

(57) **Abstract**

A tributary data signal is transported through a synchronous digital transmission system using a virtual concatenation of multiplex units. However, instead of making the entire concatenation unavailable in the case of a failure of one of the concatenated multiplex units, the concatenation is reconfigured to exclude any failed multiplex unit. Further, the data source generating the tributary data signal, is controlled to reduce the data throughput of the tributary data signal to the capacity of the remaining available concatenated multiplex units.

## Description

### Field of the Invention

The present invention relates to the field of telecommunications and more particularly to a method and network element of a synchronous digital transmission system for transmitting tributary signals using concatenated virtual containers.

### Background of the Invention

Today's long-haul data transmission is mainly based on synchronous digital transmission networks. Such a synchronous digital transmission network is defined in ITU-T G.707 (2000), which is incorporated by reference herein, and is referred to as SDH network (Synchronous Digital Hierarchy) in Europe and as SONET (Synchronous Optical Network) in North America.

Synchronous digital transmission relies on the principle of synchronous time division multiplexing. Synchronous data streams transmitted in synchronous digital transmission networks are structured into a contiguous flow of frames of equal size. Client or tributary signals to be transported are mapped into multiplex units of appropriate size and one or more multiplex units of same or different size are multiplexed into a frame. In order to allow timing deviations of network equipment along the transmission path to be compensated for, the multiplex units are able to float with respect to the frame headers and to overlap into subsequent frames. In order to allow access to individual multiplex units, these are addressed by a respective pointer each, which indicates the phase offset between the beginning of the multiplex unit and the frame header or the beginning of a next higher level multiplex unit.

The frames defined for SDH are referred to as STM-N (Synchronous Transport Module N) and have a frame repetition rate of 8kHz. The basic frame is an STM-1 with a bitrate of 155Mbit/sec. Higher level frames are obtained by bytewise interleaving N STM-1 frames. Thus, an STM-4 frame corresponds in size and bitrate to four STM-1 frames in total. Higher level frames with N=4, 16, 64, and 256 have today been defined.

Multiplex units that are carried inside the frames known as virtual containers VC-N. As SDH was defined in the late eighties and was mainly intended to carry PDH (Plesiochronous Digital Hierarchy) client signals, the virtual containers are adapted in size and capacity to the transport of PDH client signals and respective client signal mappings have been defined. The highest capacity VC is the VC-4 with a payload capacity of 140Mbit/sec and the lowest capacity VC is the VC-12 with a payload capacity of 2Mbit/sec. Other VCs defined in G.707 are VC-3 and VC-2.

However, when the need arose to transport other kind of client signals such as ATM (Asynchronous Transfer Mode) cell streams or Ethernet data streams, respective mappings were created and concatenations of VC have been defined to allow the transport of higher bitrate client signals. Today, there exist basically two types of concatenation, namely virtual concatenation and contiguous concatenation.

In a contiguous concatenation, a predefined number virtual containers are linked to form a single higher capacity transport entity. All virtual containers of the contiguous concatenation reside within a common transport module STM-N and are addressed by only one pointer. Conversely, in a virtual concatenation, all concatenated virtual containers are transported individually. Each VC has its own pointer and the VC of a virtual concatenation are re-combined in the terminating network element. From a network point of view, virtual concatenation is preferred over contiguous concatenation because it allows greater flexibility. A method for converting contiguous concatenation into virtual concatenation is known from EP 1069718. A method for automatically adapting the pointer processing of a received data stream to actual signal structure using either contiguous concatenation or individual virtual containers is known from EP 0 999 667.

Another possibility to transmit higher-capacity data signals using multiple independent lower-capacity virtual containers is known as inverse multiplexing or multi-link PPP (point-to-point protocol).

A problem with virtual concatenation is that if in one of a number of the virtually concatenated multiplex units appears to be faulty or is interrupted, the entire concatenation becomes invalid.

ITU-T Recommendation G.7042 (11/2001) provides a control mechanism, known as LCAS, in the virtual concatenation source and sink adaptation functions to hitless increase or decrease the capacity of a VCG link to meet the bandwidth needs of the application. It also provides the capability of temporarily removing member links that have experienced a failure. The LCAS assumes that in cases of capacity initiation, increase or decrease, the construction or destruction of the end-to-end path of each individual member is the responsibility of the Network and Element Management Systems. This mechanism requires the implementation of a protocol between source and sink which may not be the case in existing networks.

It is therefore an object of the present invention to provide a method and corresponding network element for a synchronous digital transmission system that allows to more flexible transport of high capacity tributary signals using concatenation of multiplex units.

### Summary of the Invention

These and other objects that appear below are achieved by a network element and corresponding method that upon detection of a failure of one of N concatenated multiplex units, reconfigures the concatenation to form a concatenation of N-1 multiplex units.

Preferably, the data rate of the client tributary signal is adapted to the capacity of the reduced concatenation. This can be achieved by either flow control in the source of the tributary signal or by dropping data packets from the tributary signal in the network.

The invention has the advantage that the over-all availability of the service is improved without providing costly extra protection capacity. A further advantage of the present invention is that no protocol between source and sink is required anymore.

### Brief Description of the Drawings

A preferred embodiment of the present invention will now be described with reference to the accompanying drawings in which
- figure 1: shows the transmission of a high bitrate tributary signal over a synchronous digital transmission network using virtual concatenation,
- figure 2: shows reconfiguration of the virtual concatenation in the case of a failure of one of the concatenated virtual containers, and
- figure 3: shows a flow chart of the method according to the invention.

### Detailed Description of the Invention

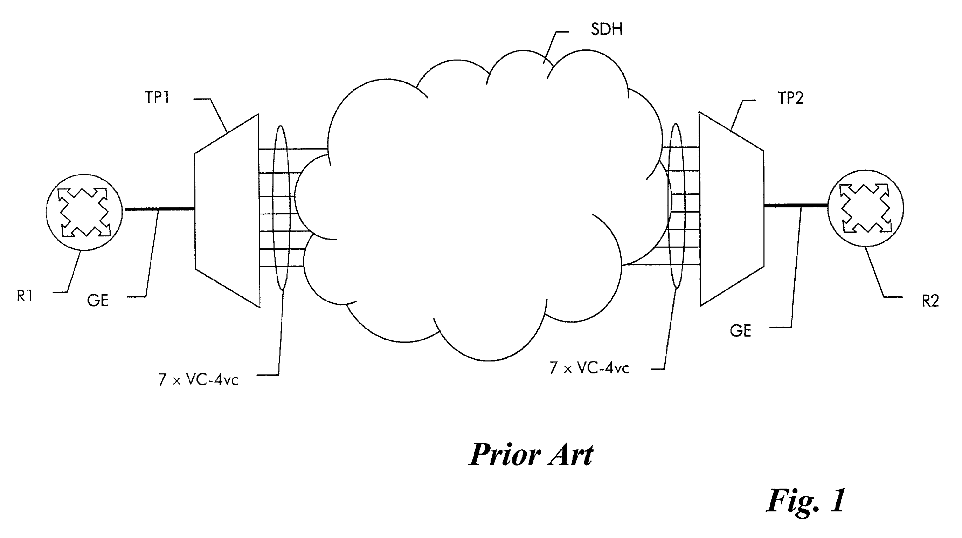

The transmission of a high-bitrate tributary signal over a synchronous digital transmission network is shown schematically in figure 1. A signal source R1 generates the high-bitrate signal GE and feeds it as tributary signal to a multiplexer TP1. The multiplexer TP1 maps the tributary signal into a number of virtually concatenated multiplexing units which are transmitted independently trough synchronous digital transmission network SDH. At the far-end edge of the transmission network SDH, the concatenated multiplexing units reach demultiplexer TP2, which recovers the original tributary signal GE and feeds it to signal sink R2.

In the example chosen, the signal source and sink are IP routers, the tributary signal is a gigabit Ethernet signal and the multiplexer generates a virtual concatenation of seven VC-4, which are each transmitted in individual transport modules over independent transmission paths through the network.

A virtual concatenation is defined in ITU-T G.707 such that n virtual containers VC-N (N=1, 2, 3, 4) can be concatenated in an arbitrary way and each VC-N of the concatenation can be routed independently through the network. The terminating network element (TP2 in the example) receives the n VC-N and puts them back into appropriate phase relationship to recover the tributary signal from the concatenation. This requires that if a single VC-N becomes unavailable, the entire concatenation n x VC-Nvc becomes unavailable, as well.

However, the invention is based on the recognition that in packet oriented transmission, even if the packets in a failed VC-N may be lost, the packets in the remaining n-1 VC-N may still be valid and of interest.

A basic idea of the invention is thus to reconfigure the virtual concatenation excluding any failed VC-N to form a virtual concatenation n-1 VC-Nvc of reduced capacity and make the packets carried therein available to the signal sink, rather than making the entire tributary signal unavailable.

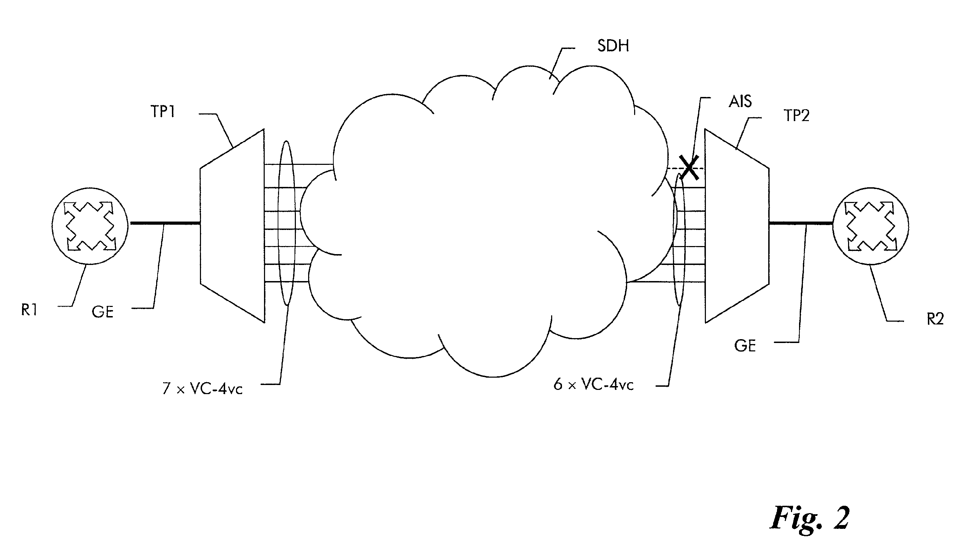

This is shown schematically in figure 2. Gigabit Ethernet signal GE is mapped by multiplexer TP1 into a virtual concatenation of seven VC-4. This is denoted as 7 x VC-4vc. The VC-4s are transmitted independently through network SDH to the far-end demultiplexer TP2, terminating the virtual concatention. However, one of the VC-4s fails and demultiplexer TP2 receives instead an alarm message AIS (alarm indication signal). Therefore, only six of the original seven concatenated VC-4s are received by TP2.

According to the standardized procedure, the termination point TP2, expecting a virtual concatenation of seven VC-4, would thus have to discard the remaining VC-4 and make the entire concatenation unavailable. Contrary, according to the invention, the demultiplexer TP2 recognizes that one of the seven VC-4 has failed and internally reconfigures the concatenation. TP2 is now expecting a reduced concatenation of 6 x VC-4 formed by the remaining six VC-4 and extracts therefrom the remaining data packets of the data signal to form tributary output signal GE, which is fed to IP router R2.

In an advantageous improvement of the invention, termination point demultiplexer TP2 informs termination point multiplexer TP1 of the failure so that the latter can adapt the tributary signal to the reduced capacity available.

Termination point TP1, being informed of the re-configuration due to a failure of one of the VC-4s, can simply discard some of the data packets from tributars signal GE. However, it is advantageous that termination point TP1 throttles down the data rate of the gigabit Ethernet signal GE using "flow control" mechanisms.

In the case of a data signal like an Ethernet signal, the data source can be controlled by the adjacent network device such that the overall throughput is reduced according to the available bandwidth on the network path. The present invention makes use of this mechanism known as flow control to throttle down the data rate of the GE signal to the capacity of the remaining concatenated VC-4s. It is therefore another idea in an improvement of the present invention to coordinate the re-configuration of a virtual concatenation in a synchronous digital transmission system like SDH and the flow control mechanism used in packet oriented data networks like Ethernet or other IP-based data networks. This procedure relies on the fact that both termination point are able to detect the available network capacity and align the adaptation function between source and the network to comply with this capacity. Accordingly, re-configuration of the virtual concatenation can take place in either the multiplexer or the demultiplexer.

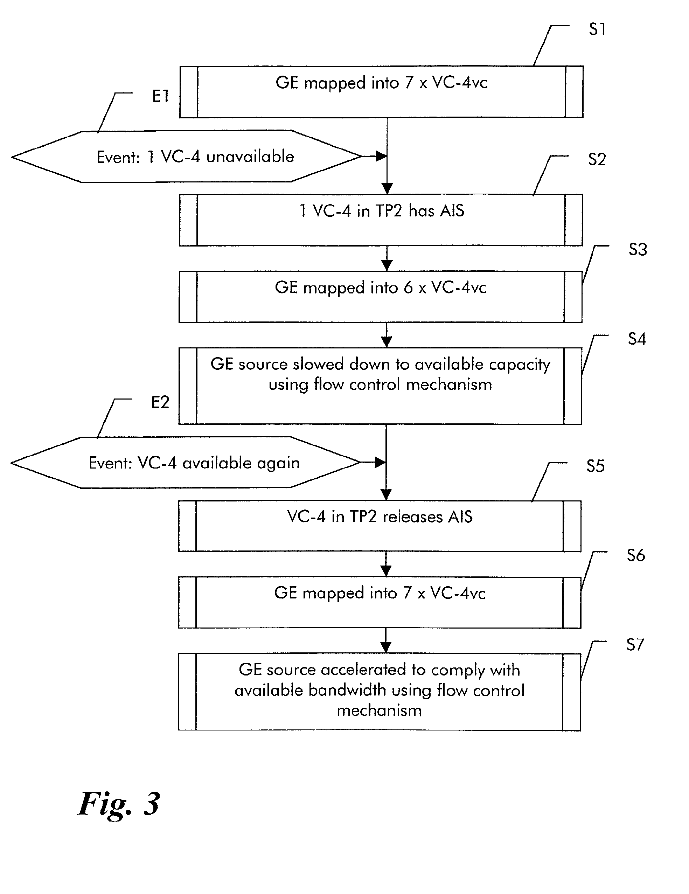

The flow of this procedure is shown by way of a flow chart in figure 3. In a first step S1, tributary signal GE is mapped into a virtual concatenation of seven VC-4. The seven VC-4s are transmitted over the network. However, due to a network failure depicted as event E1, one of the seven VC-4 becomes unavailable. Termination point TP2 of the virtual concatenation therefore receives AIS instead of the failed VC-4. Responsive to detecting the failure, TP2 reconfigures the virtual concatenation to form a reduced concatenation of the remaining six VC-4s. TP1, being informed of this re-configuration, performs a mapping of tributary signal GE into only six concatenated VC-4s. Further TP1 uses flow control mechanism to slow down data source R1 of tributary signal GE to comply with the reduced capacity available.

After the network failure that led to the loss of the failed VC-4 has been repaired, the latter becomes available again, which is depicted as event E2. Therefore, the AIS received by TP2 is released. Responsive to detecting the release of AIS, TP1 recovers the virtual concatenation of original size, i.e. 7 x VC-4vc and performs mapping of tributary signal GE into these even VC-4s again. Further TP1 uses flow control mechanism to accelerate data source R1 to comply again with the available bandwidth.

A particular advantage of the present invention is that the overall availability of the network connection is increased. Let k be the outage probability of a single VC-4. As all concatenated VC-4s travel independently through the network, it can be assumed that the outage probability is the same for each and independent of each other. The outage probability of all n VC-4 is thus kⁿ. Thus without using expensive protection resources in the network, an even higher availability can be achieved by the invention.

The present invention is likewise applicable to contiguous concatenation when the contiguous concatenation is transformed into a virtual concatenation on the transport through the network.

## Claims

1. A method of controlling transmission of a tributary data signal (GE) through a synchronous digital transport network (SDH), comprising the steps of
. mapping said tributary data signal (GE) into a number of multiplex units;
. concatenating said multiplex units to form a virtual concatenation (7 x VC-4vc);
. transmitting said concatenating independently through said transport network (SDH) to a destination network element (TP2);
. receiving at said destination network element (TP2) said multiplex units; and
. extracting said tributary data signal (GE) from said received multiplex units, **characterised by** the step of
. responsive to detecting an error condition (AIS) of one or more of said multiplex units, immediately reconfiguring said concatenation (7 x VC-4vc) at said destination network element to form a reconfigured concatenation (6 x VC-4vc) of reduced capacity.

2. A method according to claim 1, comprising the step of extracting from the multiplex units of said reconfigured concatenation a reduced data signal.

3. A method according to claim 1, comprising the step of controlling the source of said tributary data signal to reduce the data throughput to comply with the reduced capacity.

4. A method according to claim 3, using a flow control mechanism to control the data source of said tributary data signal.

5. A method according to claim 1, comprising the step of restoring the concatenation of original capacity in the case the error condition has been removed.

6. A network element for a synchronous digital transport network (SDH), comprising a demultiplexer (TP2) for extracting a tributary data signal (GE) from a number of received multiplex units (7 x VC-4vc) being concatenated to form a virtual concatenation, **characterized in that** said demultiplexer (TP2) is adapted to reconfigure said concatenation to form a reconfigured concatenation (6 x VC-4vc) of reduced capacity responsive to detecting an error condition (AIS) of one or more of said multiplex units.

7. A network element for a synchronous digital transport network (SDH), comprising a multiplexer (TP1) for mapping a tributary data signal (GE) into a number of multiplex units and concatenating said multiplex units to form a virtual concatenation (7 x VC-4vc); **characterized in that** said demultiplexer (TP1) is adapted to reconfigure said concatenation to form a reconfigured concatenation (6 x VC-4vc) of reduced capacity responsive to detecting an error condition (AIS) of one or more of said multiplex units as they are transmitted through the network (SDH).
